Europäisches Patentamt

European Patent Office

Office européen des brevets

(19)

(11) Publication number: **0 010 161**
**A1**

(12) **EUROPEAN PATENT APPLICATION**

(21) Application number: **79103448.1**

(22) Date of filing: **14.09.79**

(51) Int. Cl.³: **C 08 F 214/08**
**C 08 F 2/22, C 08 J 3/08**

(30) Priority: **15.09.78 US 942510**

(43) Date of publication of application:
**30.04.80 Bulletin 80/9**

(84) Designated Contracting States:
**BE DE FR GB IT NL**

(71) Applicant: **THE DOW CHEMICAL COMPANY**
**2030 Abbott Road Post Office Box 1967**
**Midland Michigan 48640(US)**

(72) Inventor: **Gibbs, Dale Sabin**
**2607 Mt. Vernon**
**Midland Michigan(US)**

(72) Inventor: **Benson, Jack Howard**
**2813 Blairmont**
**Midland Michigan(US)**

(72) Inventor: **Fernandez, Reet T.**
**5614 Evergreen**
**Midland Michigan(US)**

(74) Representative: **Weickmann, Heinrich, Dipl.-Ing**
**Patentanwälte Dipl.Ing.H.Weickmann et al,**
**Dipl.Phys.Dr.K.Fincke Dipl.Ing.F.A.Weickmann**
**Dipl.Chem.B.Huber, Dr.-Ing.H.Liska Möhlstrasse 22**
**D-8000 München 86(DE)**

(54) Compositions of dispersible vinylidene chloride polymer powders.

(57) A vinylidene chloride polymer powder, having a second order transition temperature of at least 50°C, is recovered from a latex and dispersed with moderate shear in a non-solvent for vinylidene chloride polymers, such as a polyol used in the preparation of polyurethane materials. A dispersion of the powder and a polyol is eminently suitable for use in the preparation of polyurethane foams to impart enhanced flame retardancy and load-bearing properties thereto.

EP 0 010 161 A1

-1-

## DISPERSIBLE VINYLIDENE CHLORIDE POLYMER POWDERS AS ADDITIVES FOR POLYMERS

The present invention relates to vinylidene chloride polymers and, more particularly to vinylidene chloride polymers which are dispersible in organic liquids which are non-solvents for such polymers.

More particularly, this invention provides a polymer additive which can be incorporated in polymers, such as, for example, polyurethane foam materials to provide both improved flame-retardancy and enhanced load-bearing properties.

The present invention provides such additives in the form of a vinylidene chloride polymer powder that can be dispersed in, for example, polyols used to prepare the polyurethane foam materials.

In one aspect, the present invention provides a composition for use in the preparation of polymeric materials having enhanced physical properties comprising (A) a non-solvent for vinylidene chloride polymers and (B) a vinylidene chloride polymer powder, having a second

27,961-F

order transition temperature of at least 50°C, which is dispersible in the non-solvent. The powder employed is obtained by a method comprising the steps of

(I)   preparing a vinylidene chloride polymer latex by emulsion polymerizing 50 to 65 weight percent vinylidene chloride and at least one copolymerizable ethylenically unsaturated comonomer, and

(II)   recovering the vinylidene chloride polymer powder from the latex.

The latex polymer particles, prior to recovery, have a diameter less than one micron.

The invention also provides a composition wherein the method for obtaining the powder further comprises, between steps (I) and (II), the steps of adding to the latex an effective degradation-reducing amount up to 20 weight percent, based on the weight of the latex polymer, of a sequentially polymerizable monomer mixture comprising an ethylenically unsaturated non-vinylidene chloride monomer, and polymerizing the monomer mixture.

In another aspect, the invention resides in a polyurethane material prepared from such a composition, e.g., wherein the non-solvent comprises a polyol.

The invention also provides a method of forming a polyurethane material by reacting a polyfunctional isocyanate with an active hydrogen-containing material, characterized by including in the reactant mixture a vinylidene chloride polymer powder obtained by the method hereinbefore described.

0010161

The dispersible vinylidene chloride polymer powders of the present invention are recovered from latices which have been prepared by polymerization in an aqueous emulsion according to processes well known in the art. Preferably, the polymerization is carried out by essentially continuous, carefully controlled addition of the requisite polymerization constituents (including polymerization initiator systems if desired) to the aqueous medium.

It is preferred to start the polymerization by adding a small amount of monomeric material to the aqueous medium and then adding the desired polymerization initiator to form a polymeric seed latex to aid in the control of particle size. The aqueous medium in which the seed latex is formed will contain the necessary surfactants to form the emulsion and will generally be adjusted to the desired pH value, as is well known in the art. Following the formation of the seed latex, the remaining amount of monomeric material is continuously added under carefully controlled conditions to the aqueous medium.

In accordance with the present invention, the vinylidene chloride polymer latices are prepared by emulsion polymerizing 50 to 65 weight percent vinylidene chloride and at least one copolymerizable ethylenically unsaturated comonomer, e.g., alkyl esters of methacrylic acid, such as methyl methacrylate, and nitriles of ethylenically unsaturated carboxylic acids, such as acrylonitrile and methacrylonitrile. The resulting vinylidene chloride copolymer or interpolymer should have a second order transition temperature of at least 50°C, preferably as high as 65°C. Accordingly, the preferred monomer

27,961-F

0010161

mixture employed in preparing the vinylidene chloride polymer comprises 50 to 55 weight percent vinylidene chloride with the remainder being selected from the aforementioned exemplary monomers.

In view of the fact that amine catalysts are typically used in the preparation of polyurethane foam materials to control the rate of urea and urethane reactions and that the urethane reactions are significantly exothermic, the vinylidene chloride polymer powders recovered from the latices hereinbefore described could have a tendency to degrade and produce hydrogen chloride when used in such applications. The accelerated evolution of hydrogen chloride caused by such degradation could not only result in discoloration of the vinylidene chloride polymer and the resultant polyurethane foam material, but could also alter the kinetics of the urethane reaction.

It has been found that a moderate decrease in the propensity of such powders to discolor when exposed to the conditions of the polyurethane foam reaction and similar deleterious environments can be achieved by sequentially polymerizing the vinylidene chloride polymer latex particles with a monomer mixture comprising an ethylenically unsaturated non-vinylidene chloride monomer.

It is believed that the sequential polymerization provides a thin cap on the latex particles which protects them from the amine catalyst, thereby reducing the rate of decomposition.

27,961-F

0010161

The sequential polymerization can be carried out in a conventional manner by adding an effective degradation-reducing amount up to 20 percent by weight of the vinylidene chloride polymer, preferably from 5 to 10 percent by weight, of the desired monomer mixture (including emulsifiers and initiators as needed) to the vinylidene chloride polymer latex and subjecting the monomer mixture to polymerization conditions. In a preferred mode, the desired monomer mixture for sequential polymerization is not added to the latex until it is certain that essentially all of the residual vinylidene chloride monomer has been depleted. Depletion of residual vinylidene chloride monomer can be accomplished, for example, by adding an additional amount of initiator or a minor amount of methyl acrylate to the polymerization vessel subsequent to the apparent completion of the vinylidene chloride polymer reaction, but prior to the addition ofthe sequentially polymerizable monomer mixture. In this manner, the possibility of including vinylidene chloride in the resultant non-vinylidene chloride polymer "cap" will be reduced.

In order to provide adequate dispersibility, the non-vinylidene chloride polymer "cap" which results from the sequential polymerization should either be uncrosslinked and have a second order transition temperature greater than 60°C, preferably greater than 65°C, or it should be crosslinked. If the "cap" is crosslinked, i.e., by copolymerizing a minor amount of a crosslinking polyfunctional comonomer with the desired ethylenically unsaturated non-vinylidene chloride monomer or monomers, the second order transition temperature requirement is not as critical, though values within the aforementioned range are preferred.

27,961-F

0010161

Exemplary ethylenically unsaturated non-vinylidene chloride monomers which can be used in the sequential polymerization reaction to prepare the "cap" polymer include the alkyl esters of methacrylic acid such as methyl methacrylate; the vinyl aromatic monomers such as styrene and vinyl toluene; and other sequentially polymerizable monomers, i.e., those which are capable of producing a "cap" satisfying the aforementioned criteria.

Exemplary copolymerizable crosslinking polyfunctional comonomers which can be sequentially polymerized with the ethylenically unsaturated non-vinylidene chloride monomers include 1,3-butylene glycol diacrylate, 1,4-butane diol diacrylate, allyl acrylate, vinyl acrylate, 1,3-butylene glycol dimethacrylate, 1,4-butane diol dimethacrylate, allyl methacrylate and vinyl methacrylate. The amount of crosslinking monomer required for dispersibility will depend upon the efficiency of the particular crosslinking monomer chosen, as well as the ethylenically unsaturated monomer or monomers with which is it polymerized. Generally the amount of crosslinking monomer used, if any, will be less than 6 percent of the weight of the sequentially polymerizable monomer mixture.

The diameter of the polymer particles in the resulting latex, which includes particles which have been "capped" by sequential polymerization as well as those which have not been "capped", should be less than one micron. Preferably, the mean particle diameter is in the range of 0.05 to 0.5 micron, most preferably in the range of 0.1 to 0.3 micron, with substantially all of the polymer particles having a diameter within that range. The preferred ranges are especially applicable if the powders obtained therefrom are to be used in the preparation of polyurethane foam materials. Larger particles will produce less discoloration in the resultant polyurethane foam materials, but smaller particles have longer dispersion stability in the polyol starting material and also provide better load-bearing properties in the foam material. Accordingly, the aforementioned preferred range represents those sizes which will give the best overall balance of properties when used in the preparation of polyurethane foam material.

The vinylidene chloride polymer powders of the present invention are recovered from the latices by conventional techniques, preferably by coagulating the latex and then washing and drying the coagulum or by spray drying the latex to produce a fine powder. The optimum temperature for coagulation will vary depending upon the type and amount of comonomer employed in preparing the vinylidene chloride polymer and particularly upon the second order transition temperature of the resultant polymer. Generally, the coagulation temperature will be in the range of 50° to 70°C, preferably from 50° to 60°C.

For purposes of the present invention, "dispersibility" is measured under the following conditions: 20 weight percent of the desired powder is mixed with a polyol having a room temperature viscosity of about 900 to 1000 cps, and the mixture is passed once through a Gifford-Wood colloid mill operating at 10,000 rpm with a gap setting .004 inch (0.1 mm) and then twice through a Gaulin homogenizer operating at 5000 psi (350 kg/sq cm). Under such conditions, substantially all of a powder suitable for use in the present invention will break down in the non-solvent liquid, e.g., polyol, and regenerate the original latex particles. Essentially all of the powder particles which do not break down to the latex particle size, if any, should be of a size less than 100 microns. Preferably at least 40 percent of the powder particles break down to the original latex particle size.

As used herein, "non-solvents for vinylidene chloride polymers" is intended to be descriptive of liquid organic reactants which are used in the preparation of polymeric materials. In particular, it is intended to include polyols, which are used in the preparation of polyurethane materials; dihydroxy alcohols, which are used in the preparation of polyester resins; and the like. In all cases, the vinylidene chloride polymer powders of the present invention are suitably employed to render the resulting polymeric materials more resistant to ignition and burning while generally retaining and/or improving other beneficial physical properties.

Conventional vinylidene chloride polymers can, in some instances, be blended directly with a suitable thermoplastic polymer to produce a satisfactory product. However, the vinylidene chloride polymer powders according to the present invention are advantageously incorporated into polymeric material by dispersing the powder in the desired non-solvent liquid reactant with moderate shear and thereafter carrying out the contemplated polymerization reaction. The latter method is critically employed in the preparation of many foam polymeric materials, particularly in the preparation of foamed polyurethane materials.

Polyurethane materials are prepared by the methods well known in the art by reacting a polyfunctional isocyanate

27,961-F

with a polyfunctional chemical compound having an active hydrogen in its structure such as a polyester, polyesteramide or polyether or mixture of two or more of such materials. The latter component is generally referred to as the "active hydrogen-containing material" and is typically sufficiently liquid to permit mixing and reaction with the polyfunctional isocyanate in producing the polyurethane. The active hydrogen-containing materials conventionally used contain hydroxyl groups as the radicals having the active hydrogen and thus are generally termed "polyols". In addition, other hydroxyl-capped polymers useful as the polyol in preparing polyurethane resins include polyformals; the hydroxyl-terminated lactone polyesters; and alkylene oxide adducts of the alkyl alcohol-styrene polymers. For reasons of commercial availability and cost, it is conventional to use polyethers having hydroxyl-terminated chains in the preparation of polyurethane foams and either such polyethers or hydroxyl-terminated polyesters in preparing vulcanizable gum, adhesive, films, etc. The polyurethane end products may occasionally be crosslinked to some extent by including with the polyol (which is generally di- or polyfunctional) a small amount of polyfunctional crosslinking agent.

The active hydrogen-containing materials suitable for use in the preparation of polyurethane materials of the present invention are any of those known in the art and (1) which form stable and uniform dispersions with the vinylidene chloride polymer powders, which dispersions are preferably dilutable without the formation of undesirable precipitates with other components used to form the polyurethane; (2) which are liquids, at least at the temperatures used for preparing the dispersions and for the reaction with the polyisocyanate; and (3)

27,961-F

which have at least two radicals reactive with the isocyanato radicals of the polyisocyanate so as to form a polymeric reaction product. The preferred active hydrogen-containing materials are the polyols having the aforementioned properties.

The polyols employed can have hydroxyl numbers which vary over a wide range. The exact polyol employed depends, among other things, upon the end use of the polyurethane product to be produced. For example, in the case of foamed reaction products, the molecular weight of the hydroxyl number is selected preferably to result in flexible, semiflexible, or rigid foams. In such applications, the polyols preferably possess a hydroxyl number of from 200 to 1000 when employed in rigid foam formulations, from 50 to 150 for semiflexible foams, and from 20 to 70 or more when employed in flexible foam formulations.

The vinylidene chloride polymer powders are advantageously incorporated into polyurethanes by first forming a dispersion of the powder in the desired polyol. Generally, the resulting dispersions should have a viscosity low enough to permit ready mixing with additional quantities of polyol used, if any, and with the other components of the polyurethane reaction. Furthermore, the resulting dispersions should be at least sufficiently stable to prevent sedimentation during the period required to carry out the polyurethane reaction. If the dispersions are to be prepared and then stored prior to use, they should be stable for a much longer period of time, e.g., usually at least three months. Generally, the dispersions of the present invention demonstrate such long-term stability requirements, particularly those

27,961-F

0010161

dispersions containing the smaller vinylidene chloride polymer powder particles.

The polymer/polyol dispersions of the present invention may be used in place of the polyols of the prior art in any of the processes used in preparing polyurethanes. Thus, the dispersions may be used in the prepolymer process, the quasi-prepolymer process or the one-shot process. The polyurethanes may be further reacted with epoxy resins, cured with sulfur, peroxides or other curing agents, or otherwise reacted or modified.

Referring now to the use of the present vinylidene chloride polymer powders in the preparation of polymeric materials in general, the amount of powder which will be incorporated into a desired polymeric material will depend upon the particular vinylidene chloride polymer powder used and upon the degree to which it is desired to enhance flame-retardancy and/or other beneficial physical properties in the resulting polymeric material, as well as other technical and economic considerations known and understood by those skilled in the art. Generally, the resulting polymeric materials will contain from 2 to 50 weight percent of vinylidene chloride polymer powder, preferably from 3 to 30 weight percent. Accordingly, the amount of powder dispersed in the non-solvent will be adjusted to produce such results.

The resulting polymeric materials may contain further modifying ingredients such as heat and light stabilizers, pigments, conventional flame-retardant synergists, and so forth, as necessary or desired for particular applications.

27,961-F

0010161

With respect to polyurethane foam materials, in particular surfactants or emulsifiers, are frequently used to provide the necessary cell formation and growth for optimum processability. However, polyurethane foam materials prepared from polyols containing the vinylidene chloride polymer powders in accordance with the present invention do not generally require the use of such surfactants or emulsifiers. Nevertheless, such surfactants or emulsifiers may be advantageously employed, especially when using powders prepared from latices containing the larger sized vinylidene chloride polymer latex particles inasmuch as such particles have a reduced tendency to improve cell size in the polyurethane foam material.

The vinylidene chloride polymer powders of the present invention can be moderately stabilized in an environment of high temperature and/or basic compounds, e.g., that environment encountered in preparing polyurethane foam materials, by sequential polymerization with non-vinylidene chloride monomers. Alternatively, or in addition thereto, conventional stabilizers for vinylidene chloride polymers, such as the hindered phenolic antioxidants and the like, may also be employed. It has been found that only marginal improvement in the color of a polyurethane foam material is achieved by using epoxy stabilizers. It may be necessary for a user to determine by simple preliminary experimentation those stabilizers which will be suitably employed with the vinylidene chloride polymer powders used in the present invention. Suitable stabilizers are preferably used by adding them to the aqueous medium prior to or during the emulsion polymerization of the vinylidene chloride polymer, according to methods which are known in the art.

27,961-F

The following specific examples further illustrate the invention. Parts and percentages are by weight unless otherwise indicated.

## Example 1

The following recipe and technique were used to prepare a vinylidene chloride polymer powder which is dispersible in polyols and other non-solvents for vinylidene chloride polymers:

### Initial Water Phase

1200 g distilled water

6.95 g dihexyl sodium sulfosuccinate emulsifier (80 percent active)

6.36 g sodium persulfate

### Emulsifier Feed Stream

53 g $C_{12}H_{25}C_{12}H_7O(SO_3Na)_2$ emulsifier (45 percent active) in 300 g aqueous solution

Used 300 g in 12 hours (feed rate = 25 g/hr)

### Monomers for Seed Latex Reaction

100 g vinylidene chloride (VDC)

100 g acrylonitrile (AN)

Used 90 g in seed latex reaction

### Monomer Mix

1000 g VDC

1000 g AN

Used 1500 g in 12 hours (feed rate = 125 g/hr)

The initial water phase was introduced into a 3 liter reactor and placed under a vacuum of about 25 inches (63.5 cm) Hg for 10 minutes while being heated to

27,961-F

52°C. While agitating the contents of the reactor at 200 rpm, the vacuum was then shut off and 90 g of the seed latex monomers were introduced. After the seed latex reaction had proceeded to approximately a 2 psi (0.141 kg/sq cm) pressure drop from the maximum pressure achieved, introduction of the mixed monomers at 125 g/hr was begun and continued for 12 hours while concurrently adding the emulsifier stream at a rate of 25 g/hr. At the end of that period, the mixed monomer and emulsifier streams were shut off and a 2 percent solution of sodium bisulfite was added at a rate of 25 g/hr for 1.5 hours to complete the reaction.

The resultant latex, containing a polymer comprising about 50 percent VDC and 50 percent AN was recovered by the following technique: 30 ml of 32 percent calcium chloride was added to 800 ml of water and heated to 50°C with vigorous stirring. The latex was then added slowly while continuing the vigorous agitation. As soon as some growth of coagulated particles was observed, the mixture was cooled as rapidly as possible and the coagulum collected in a centrifuge. The coagulum was washed 10 minutes with a water spray and then allowed to dry in a tray at room temperature.

Example 2

In accordance with the present invention, a number of vinylidene chloride polymer powders were recovered from latices and dispersed in a polyether polyol having a MW of 4700, hydroxyl number 31.7 to 36.3 and triol functionality, a non-solvent for vinylidene chloride polymers. Each dispersion was prepared by mixing 100 g of the polyol and 15 g of the desired powder in a high-speed blender for 15 minutes. The

27,961-F

dispersions were then cooled to 20°C and evaluated for dispersion quality by observing dispersion particle size and sedimentation rate.

Polyurethane foam materials were then prepared from the cooled dispersions according to a standard technique and recipe. The following ingredients were first mixed with each dispersion in a high-speed blender for 70 seconds:

(a) 1 g of a blend consisting of:
    45 percent dioctyl phthalate,
    5 percent XF11630 silicone surfactant, and
    50 percent Q25043 silicone surfactant

(b) 0.4 g solution of 33% triethylene diamine in dipropylene glycol

(c) 0.05 g solution of 70 percent bis(N,N-dimethylaminoethyl)ether in dipropylene glycol

(d) 0.75 g T-10 solution of 50 percent stannous octoate in dioctyl phthalate

(e) 1.2 g diethanolamine

(f) 2.6 g water

Thereafter, 35.2 g toluene diisocyanate was added and the mixture was blended until foaming started. Each foaming mixture was then poured into a container, allowed to rise for 5 minutes, and heated in an oven for 10 minutes at 120°C. The resulting foam materials were compressed to open the cells and then reheated for 15 minutes at 120°C. After aging for 7 days, the foam materials were tested according to ASTM-D-2406 for physical properties.

For comparison, a number of polyurethane foam materials were prepared from the same recipe, but using various vinyl chloride (VC) or vinylidene chloride (VDC) polymer additives.

The results of these tests, as shown in Table I, demonstrate that the dispersions of the present invention are superior in quality to the other dispersions tested. Additionally, the polyurethane foams prepared from such dispersions in accordance with the present invention have a better balance of tear and compressive strength when compared to the foams outside this invention. Furthermore, the foams prepared with the dispersions of the present invention passed the Department of Transportation Motor Vehicle Safety Standard No. 302, thereby demonstrating the flame retardancy of such materials. Similar good results will be obtained by using any of the dispersions identified in the claims which follow.

TABLE I

| | | Polymer Additive | | |
| | | Particle size (micron) | $Tg^{(1)}$ (°C) | Dispersion Quality |
|---|---|---|---|---|
| Sample | Composition | | | |
| For Comparison | | | | |
| 1 | 80 VDC/20 AN | $0.13^{(2)}$ | 40 | very poor |
| 2 | 70 VDC/30 MMA | $0.18^{(2)}$ | 53 | poor |
| 3 | 80 VDC/20 MMA | $0.18^{(2)}$ | 35 | poor |
| 4 | 100 VC | $0.23^{(2)}$ | 80 | poor |
| 5 | 90 VDC/10 VC | $200^{(3)}$ | $0^{(4)}$ | very poor |
| The Invention | | | | |
| 6 | 50 VDC/50 MMA | $0.19^{(2)}$ | 75 | good |
| 7 | 60 VDC/40 MMA | $0.18^{(2)}$ | 65 | good |
| 8 | 50 VDC/50 AN | $0.25^{(2)}$ | 75 | good |

27,961-F

-17-

0010161

TABLE I (Cont.)

| | Polyurethane Foam Material | | | | |
|---|---|---|---|---|---|
| Sample | Tear Strength lb/in (kg/m) | 25% Compression lb/4 sq in (kg/25.8 sq cm) | 65% Compression lb/4 sq in (kg/25.8 sq cm) | Modulus | Density |
| Control | 1.0 (17.86) | 1.0 (0.454) | 2.0 (0.908) | 2.0 | 2.0 |
| For Comparison | | | | | |
| 1 | 2.05 (36.6) | 1.0 (0.454) | 2.43 (1.1) | 2.43 | 2.28 |
| 2 | 1.70 (30.36) | 0.93 (0.422) | 2.2 (0.999) | 2.36 | 2.30 |
| 3 | 1.86 (33.22) | 0.70 (0.318) | 1.67 (0.758) | 2.38 | 2.23 |
| 4 | 2.26 (40.36) | 0.87 (0.395) | 2.07 (0.94) | 2.39 | 2.33 |
| 5 | 1.93 (34.47) | 0.87 (0.395) | 1.93 (0.876) | 2.21 | 2.22 |
| The Invention | | | | | |
| 6 | 3.07 (54.83) | 1.17 (0.531) | 3.57 (1.62) | 3.05 | 2.62 |
| 7 | 1.85 (33.04) | 1.17 (0.531) | 2.8 (1.27) | 2.39 | 2.27 |
| 8 | 2.26 (40.36) | 1.07 (0.486) | 2.6 (1.18) | 2.43 | 2.27 |

0010161

NOTES TO TABLE I

MMA = methyl methacrylate

(1) second order transition temperature

(2) size of the latex particles prior to recovery

(3) a suspension polymerized product

(4) due to the plasticization of the polymer prior to use

27,961-F

C l a i m s :

1.  ·Composition comprising (A) a non-solvent for vinylidene chloride polymers and (B) a vinylidene chloride polymer powder obtained by a method comprising the steps of

(I)  preparing a vinylidene chloride polymer latex by emulsion polymerizing 50 to 65 weight percent vinylidene chloride and at least one copolymerizable ethylenically unsaturated comonomer, and

(II)  recovering the vinylidene chloride polymer powder from the latex;

characterized in that the latex polymer particles, prior to recovery, have a diameter less than one micron and the vinylidene chloride polymer is dispersible in the non--solvent and has a second order transition temperature of at least 50°C.

2.  Composition of Claim 1 wherein the latex polymer particles, prior to recovery, have a mean diameter in the range of 0.05 to 0.5 micron.

3.  Composition of Claim 2 wherein the latex polymer particles, prior to recovery, have a mean diameter in the range of 0.1 to 0.3 micron.

4. Composition of any one of Claims 1 to 3 wherein the ethylenically unsaturated comonomer is an alkyl ester of methacrylic acid or a nitrile of an ethylenically unsaturated carboxylic acid.

5. Composition of Claim 4 wherein the ethylenically unsaturated comonomer is acrylonitrile, methacrylonitrile, or methyl methacrylate.

6. Composition of Claim 1 wherein the method for obtaining the powder further comprises, between steps (I) and (II), the steps of
adding to the latex an effective degradation-reducing amount up to 20 weight percent, based on the weight of the latex polymer, of a sequentially polymerizable monomer mixture comprising an ethylenically unsaturated non-vinylidene chloride monomer, and
polymerizing said monomer mixture.

7. Composition of Claim 6 wherein the non-vinylidene chloride monomer is an alkyl ester of methacrylic acid or a vinyl aromatic monomer.

8. Composition of Claim 6 or 7 wherein the non-vinylidene chloride monomer comprises methyl methacrylate.

9. Composition of any one of Claims 6 to 8 wherein the polymer resulting from the polymerization of the sequentially polymerizable monomer mixture has a second order transition temperature of at least about 60°C.

27,961-F

0010161

10. Composition of any one of Claims 7 to 9 wherein the sequentially polymerizable monomer mixture further comprises a copolymerizable crosslinking poly-functional comonomer.

27,961-F

# European Patent Office

# EUROPEAN SEARCH REPORT

Application number

EP 79 10 3448

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | GB - A - 1 025 914 (PITTSBURGH PLATE GLASS COMPANY)  * Claims 1,3,6-9; page 2, lines 2-9; example II * | 1,4,5 | C 08 F 214/08 C 08 F 2/22 C 08 J 3/08 |
| | FR - E - 93 606/FR - A - 1 478 438 (I.C.I.)  * Summary A1,2; page 1, column 2, line 17 - page 2, column 2, line 23 * | 1 | |
| A | FR - A - 2 040 326 (STALEY)  * Claims 1,6; page 7, line 28 - page 8, line 18; page 12, lines 26-36 * | 1,4-10 | TECHNICAL FIELDS SEARCHED (Int.Cl. 3)  C 08 F 14/00- C 08 F 14/04 C 08 F 14/08 C 08 F 214/00- C 08 F 214/04 C 08 F 214/08 C 08 L 27/08 |
| A | GB - A - 959 455 (HOECHST)  * Claims 1,2,5,6,10,11; page 2, lines 98-114 * | 1-5 | C 08 F 2/22- C 08 F 2/30 C 08 J 3/08 C 08 J 9/00 C 08 F 6/14 C 08 F 6/18 C 08 F 6/24 |

CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 21-12-1979 | PERMENTIER |

EPO Form 1503.1  06.78